# EUROPÄISCHE PATENTSCHRIFT

(11) **EP 3 819 605 B1**
(45) Veröffentlichungstag und Bekanntmachung des Hinweises auf die Patenterteilung: **21.06.2023**
(21) Anmeldenummer: 19208253.5
(22) Anmeldetag: 11.11.2019
(51) Int. Cl.: G01G 13/04, G01G 13/02, B65D 90/56, G01G 13/24

(54) **VORRICHTUNG ZUM ABFÜLLEN VON PULVERFÖRMIGEM FÜLLGUT**
DEVICE FOR DISPENSING POWDER FILLER
DISPOSITIF DE REMPLISSAGE DU MÉLANGE PULVÉRULENT

(43) Veröffentlichungstag der Anmeldung: 12.05.2021
(73) Patentinhaber: GREIF-VELOX Maschinenfabrik GmbH, 23560 Lübeck (DE)
(72) Erfinder: Mildner, Alexander, 23560 Lübeck (DE); Feye, Janis, 23560 Lübeck (DE); Hoffmann, Stefan, 23560 Lübeck (DE)
(74) Vertreter: Patentanwälte Vollmann Hemmer Lindfeld Partnerschaft mbB

(56) Entgegenhaltungen:
- CH-A- 494 695
- DE-U1-202005 011 346
- US-A- 3 942 562

## Beschreibung

Die Erfindung betrifft eine Vorrichtung zum Abfüllen von pulverförmigem Füllgut, insbesondere einen Pneumatikpacker.

Derartige Vorrichtungen zählen zum Stand der Technik und werden zum Beispiel von der Greif Velox Maschinenfabrik GmbH in Lübeck zum Beispiel unter der Typenbezeichnung BVP4.40 vertrieben. Bei dieser Maschine wird pulverförmiges Füllgut aus einem Vorratsbehälter druckluftunterstützt einem Füllstutzen zugeführt, der zum Einführen in das Ventil eines Ventilsacks ausgebildet ist, in den das Füllgut abgefüllt werden soll. Dabei ist dem Ventilsack eine Wägeeinrichtung zugeordnet, welche den Abfüllvorgang steuert, sodass bei Erreichen des gewünschten Füllgewichts der Abfüllvorgang beendet wird. Hierzu ist eine Dosiereinrichtung vorgesehen, welchen einen elastischen Schlauchabschnitt aufweist, der in Fließrichtung des Füllguts gesehen vor dem Füllstützen innerhalb der Maschine angeordnet ist und durch den das abzufüllende Gut zum Zwecke der Dosierung durchleitbar ist. Dieser Schlauchabschnitt ist an seiner Außenseite durch Schieber beaufschlagt, mit denen der Durchgang des Schlauchabschnittes teilweise oder vollständig abgesperrt werden kann, wobei ein großer Schieber vorgesehen ist, welcher über den gesamten Schlauchquerschnitt wirksam ist sowie zwei gegenüberliegend kleine Schieber, welche jeweils nur etwa über den halben Querschnitt wirksam sind.

Zu Beginn des Füllvorgangs sind alle drei Schieber in einer zurückgezogenen Stellung angeordnet, sodass der Schlauchabschnitt einen maximalen Querschnitt seines Durchgangs aufweist. In dieser Stellung erfolgt der Füllvorgang solange bis in dem Ventilsack 80 % des vorgesehenen Füllguts abgefüllt sind, d.h. bis der Ventilsack etwa 80 % des gewünschten Füllgewichts erreicht hat. Dann wird der große Schieber sowie einer der beiden kleinen Schieber in die Schließstellung verfahren, sodass nur noch ein vergleichsweise kleiner, freier Durchschnitt des Schlauchabschnitts verbleibt. Mit diesem kleinen freien Querschnitt erfolgt die Feindosierung bis der Ventilsack sein vorgesehenes Füllgewicht erreicht hat, wonach auch der zweite kleine Schieber in die Schließstellung verbracht wird, in welcher der Durchgang des Schlauchabschnittes vollständig abgesperrt ist.

Aus DE 20 2005 011 346 U1 ist eine Dosiereinrichtung bekannt, welche mit zwei gegenüberliegend angeordneten Schiebern arbeitet, welche den Schlauchabschnitt jeweils über den gesamten Querschnitt, jedoch nur bis zur Hälfte beaufschlagen. Weitere ähnliche Dosiereinrichtungen der Stand der Technik sind aus Dokumente US3942562A und CH494695A bekannt.

Diese einleitend genannte Bauart hat sich bestens bewährt. Ein gewisser Nachteil dabei ist allerdings, dass in der letzten Phase der Feindosierung der Abfüllvorgang vergleichsweise langsam erfolgt. Darüber hinaus erzielt diese Dosiereinrichtung nur dann eine hohe Füllgenauigkeit, wenn Säcke einer vorgegebenen Größe, beispielsweise für ein Füllgewicht von 25 kg abgefüllt werden. Insbesondere zum Abfüllen kleinerer Säcke ist die Dosiereinrichtung dann nicht genau genug oder umgekehrt zum Abfüllen größerer Säcke zu langsam.

Vor diesem Hintergrund liegt der Erfindung die Aufgabe zu Grunde, eine Vorrichtung zum Abfüllen von pulverförmigem Füllgut zu verbessern, insbesondere so auszubilden, dass Behältnisse, insbesondere Säcke unterschiedlicher Größe und unterschiedlichen Füllgewichts möglichst schnell und mit hoher Füllgenauigkeit befüllbar sind.

Diese Aufgabe wird gemäß der Erfindung durch eine Vorrichtung zum Abfüllen von pulverförmigem Füllgut mit den in Anspruch 1 angegebenen Merkmalen erfüllt. Vorteilhafte Ausgestaltungen der Erfindung sind in den Unteransprüchen, der nachfolgenden Beschreibung und der Zeichnung angegeben.

Die erfindungsgemäße Vorrichtung zum Abfüllen von pulverförmigem Füllgut, insbesondere ein Pneumatikpacker, weist eine Dosiereinrichtung auf, welche einen elastischen Schlauchabschnitt aufweist, durch den das abzufüllende Gut zum Zwecke der Dosierung durchleitbar ist und der an seiner Außenseite durch Schieber beaufschlagt ist, mit denen der Durchgang des Schlauchabschnittes teilweise oder vollständig absperrbar ist. Dabei ist mindestens ein Schieber vorgesehen, der aus einer ersten, den Durchgang freigebenden Position in eine zweite, den Durchgang teilweise absperrende Position verbringbar ist und mindestens ein weiterer Schieber, welcher aus einer den Durchgang ganz oder teilweise freigebenden Position in eine den Durchgang teilweise oder vollständig absperrenden Position verbringbar ist. Gemäß der Erfindung ist eine Steuerung vorgesehen, mit welcher der mindestens eine weitere Schieber zum Zwecke der Feindosierung in Zwischenpositionen verbringbar ist, wobei eine Wägeeinrichtung vorgesehen ist, welche das Gewicht des abgefüllten Füllguts erfasst, und eine Maschinensteuerung vorgesehen ist, welche in Abhängigkeit eines einstellbaren Füllgewichts eine Sollgröße für eine Füllstandsregelung vorgibt.

Grundgedanke der erfindungsgemäßen Lösung ist es, eine Steuerung vorzusehen, mit der der mindestens eine weitere Schieber zum Zwecke der Feindosierung in Zwischenpositionen verbringbar ist, dass die Steuerung des weiteren Schiebers in die Füllstandsregelung eingegliedert ist, wobei die Maschinensteuerung in Abhängigkeit der Geschwindigkeit der Gewichtszunahme und des Gewichts des abgefüllten Guts die Sollgröße für die Regelung vorgibt.

Hierdurch ist es möglich, eine Feinsteuerung erst ganz gegen Ende des Füllvorgangs einzuleiten, wodurch trotz höchster Genauigkeit der Füllmenge der Füllvorgang bis zum Ende vergleichsweise schnell ablaufen kann. Grundsätzlich kann eine solche Steuerung auch für mehrere Schieber vorgesehen sein, bevorzugt ist jedoch nur ein Schieber zum Verbringen in Zwischenpositionen ausgestaltet, wohingegen die Steuerung der übrigen Schieber so verbleibt wie es nach dem Stand der Technik erfolgt, das heißt, dass die Schieber nur von einer geöffneten Endposition in eine den Querschnitt ganz oder teilweise absperrende Endposition und umgekehrt bewegbar sind. Hierdurch wird trotz höherer Füllgenauigkeit und der Möglichkeit der Befüllung unterschiedlicher Behältnisgrößen eine vergleichsweise einfache und zuverlässige Steuerung der Dosiereinrichtung sichergestellt. Auch regelungstechnisch kann eine solche Steuerung, die vorzugsweise nur einen weiteren Schieber umfasst, wesentlich einfacher realisiert werden, als wenn mehrere Schieber in Zwischenpositionen gesteuert werden können, was jedoch gemäß der Erfindung auch vorgesehen sein kann. Dadurch, dass gemäß der Erfindung der weitere Schieber zum Zwecke der Feindosierung in Zwischenpositionen verbringbar ist, kann zum einen die Feindosierung in der Endphase des Füllvorgangs wesentlich genauer als beim Stand der Technik erfolgen, zum anderen können auch deutlich kleinere Gebinde mit hoher Füllgenauigkeit abgefüllt werden ohne maschinenseitig Eingriffe vornehmen zu müssen.

Besonders vorteilhaft ist es, wenn die Schieber, vorzugsweise jeder Schieber, durch einen doppeltwirkenden Pneumatikzylinder gesteuert ist. Soweit es den Pneumatikzylinder für den weiteren Schieber angeht, ist dieser gemäß einer Weiterbildung der Erfindung mit einem Wegaufnehmer versehen, welcher die Kolbenstellung des Schiebers oder eine vergleichbare Größe erfasst, welche mit der Ausfahrlänge einhergeht. Derartige Wegaufnehmer zählen zum Stand der Technik und sind verfügbar, sodass die Kolbenstellung bzw. die Ausfahrlänge der Kolbenstange in einfacher Weise vorzugsweise von außen detektierbar ist. Solche, vorzugsweise elektrisch arbeitenden bzw. ein elektrisches Ausgangssignal erzeugende Wegaufnehmer sind bestens geeignet, um den Pneumatikzylinder des weiteren Schiebers entsprechend anzusteuern bzw. in eine Regelung einzubinden. Gemäß einer Weiterbildung der Erfindung ist es vorgesehen, die Steuerung des weiteren Schiebers in eine Füllstandsregelung einzugliedern, um eine hohe Abfüllgenauigkeit auch bei kleinen Gebinden zu gewährleisten.

Bei Verwendung von einem doppeltwirkenden Pneumatikzylinder für den weiteren Schieber kann die Regelung vorteilhaft durch eine elektronische Regelung mit zwei Druckregelventilen gebildet sein, die den beiden Druckräumen des doppeltwirkenden Pneumatikzylinders zugeordnet sind, wobei die Kolbenstellung, die vorteilhaft über einen außenseitig angeordneten Wegaufnehmer erfasst wird, die Regelgröße bildet.

Die erfindungsgemäße Ausgestaltung benötigt mindestens zwei Schieber. Besonders vorteilhaft ist jedoch eine Anordnung von drei Schiebern, wobei sich ein erster Schieber über den gesamten Querschnitt des Schlauchabschnitts erstreckt und dieser so ausgelegt ist, dass er in Absperrposition vorzugsweise den Schlauchdurchgang halbiert. Gegenüberliegend von diesem ersten Schieber sind vorteilhaft ein zweiter und ein weiterer Schieber vorgesehen, die sich jeweils über einen Teil des Querschnitts des Schlauchabschnitts, vorzugsweise jeweils über etwa die Hälfte, erstrecken. Mit einer solchen Anordnung, bei welcher lediglich der weitere Schieber zur Steuerung in Zwischenpositionen vorgesehen ist, ergibt sich eine große Varianz der Füllstromauslegung. So kann beispielsweise dann, wenn alle drei Schieber in der geöffneten Stellung sind, der volle Schlauchquerschnitt freigegeben werden und ein Grobstrom mit hoher Förderleistung durchgeleitet werden. Wenn der erste Schieber in seiner Absperrstellung verfahren wird, wobei die beiden gegenüberliegenden Schieber geöffnet bleiben, so ist der Querschnitt des Durchgangs des Schlauchabschnittes halbiert, es ergibt sich dann ein Mittelstrom. Wenn hingegen der erste und der zweite Schieber in die Absperrstellung gebracht werden, verbleibt lediglich der weitere Schieber in geöffneter Stellung, der Schlauchquerschnitt ist zur Durchleitung eines Feinstroms eingestellt. Aufgrund der möglichen Zwischenpositionen des weiteren Schiebers kann weiter fein dosiert werden bis zur Schließstellung, in welcher alle drei Schieber geschlossen und somit der elastische Schlauchabschnitt vollständig abgesperrt ist.

Dabei hat es sich als besonders vorteilhaft erwiesen, wenn der erste und der weitere Schieber zu entgegengerichteten Seiten des Schlauchabschnitts angeordnet sind. Wenn ein erster, ein zweiter und der weitere Schieber vorgesehen sind, dann ist es besonders vorteilhaft, wenn der erste Schieber zu einer Seite und der zweite und der weitere Schieber zu der anderen Seite des Schlauchabschnitts, und zwar entgegengerichtet zueinander angeordnet sind.

Mit der erfindungsgemäßen Anordnung kann eine schnelle Abfüllung von Säcken unterschiedlicher Füllmengen mit hoher Füllgenauigkeit erreicht werden. Die erfindungsgemäße Maschine ist vorzugsweise zum Abfüllen von Säcken mit einem Füllgewicht zwischen etwa 5 kg bis 50 kg vorgesehen, auf der Maschine können somit sämtliche handelsüblichen Säcke abgefüllt werden.

Die Erfindung ist nachfolgend anhand eines in den Zeichnungen dargestellten Ausführungsbeispiels näher erläutert. Es zeigen
- Fig. 1: in stark vereinfachter schematischer Darstellung die Anordnung von drei Schiebern an dem elastischen Schlauchabschnitt in unterschiedlichen Schaltstellungen und
- Fig. 2: die Einbindung des pneumatischen Hubzylinders zur Steuerung des weiteren Schiebers in eine Regelung und in die Maschinensteuerung.

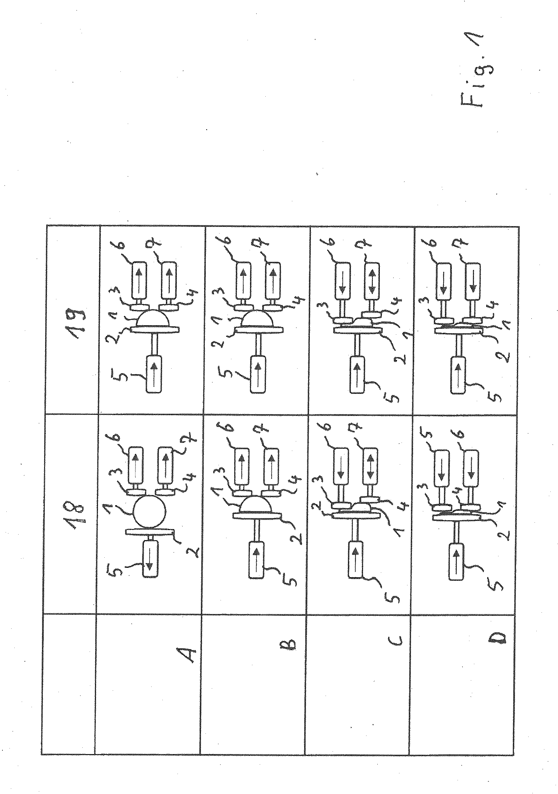

In der schematischen Darstellung gemäß Fig. 1 ist mit 1 ein elastischer Schlauchabschnitt gekennzeichnet, wie er bei einem Pneumatikpacker zwischen einer Füllgutzuführleitung und einem Füllstutzen, auf welchem der abzufüllende Ventilsack zu positionieren ist, angeordnet ist. Dieser elastische Schlauchabschnitt 1 ist Teil einer Dosiereinrichtung, welche einen ersten Schieber 2 aufweist, der sich über die gesamte Höhe des Querschnitts des elastischen Schlauchabschnitts 1 erstreckt sowie zwei weitere, entgegengerichtet wirkende Schieber 3 und 4. Der zweite Schieber 3 und der weitere Schieber 4 erstrecken sich jeweils über etwa die halbe Höhe des Querschnitts des Schlauchabschnitts 1 und greifen entgegengerichtet zum ersten Schieber 2 an der anderen Seite des Schlauchabschnitts 1 an. Der erste Schieber 2 ist über einen doppeltwirkenden Pneumatikzylinder 5 gesteuert, der zweite Schieber 3 ist über einen doppeltwirkenden Pneumatikzylinder 6 gesteuert und der weitere Schieber 4 ist über einen doppeltwirkenden Pneumatikzylinder 7 gesteuert. Die Pneumatikzylinder 5 bis 7 sind gleich ausgebildet, wobei der Pneumatikzylinder 7 mit einem außen am Zylinder angebrachten Wegaufnehmer 8 versehen ist, mit welchem die Stellung seines Kolbens 9 bzw. die Ausfahrlänge seiner Kolbenstange 10 detektierbar ist.

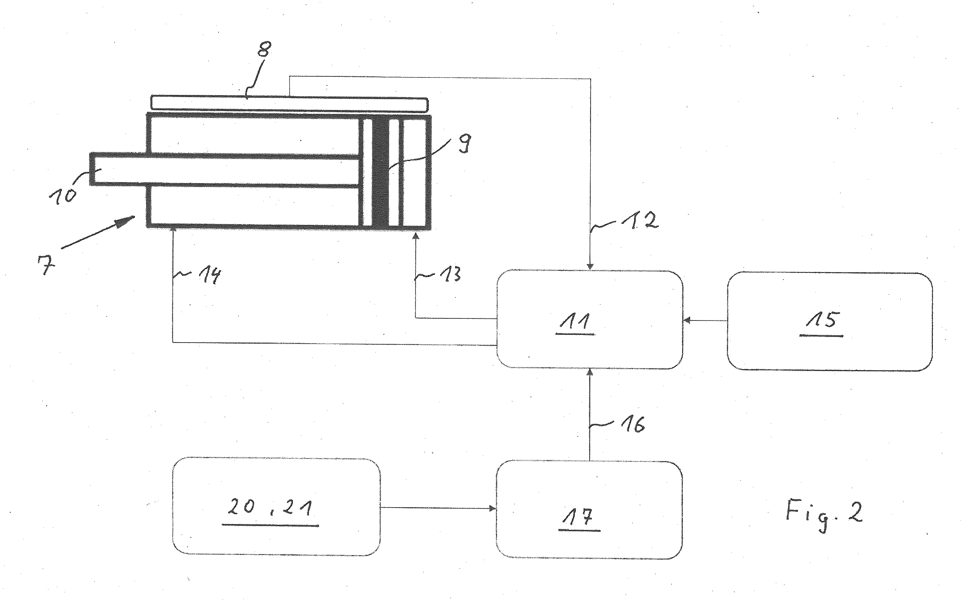

Die Anordnung und Dimensionierung der Pneumatikzylinder 5 bis 7 ist so, dass diese in ihrer öffnenden Endstellung den Schlauchquerschnitt 1 vollständig freigeben und in der absperrenden Endstellung den Schlauchquerschnitt bis etwa zur Hälfte absperren, wobei der erste Schieber die in Fig. 1 linke Hälfte des Schlauchabschnitts und der zweite und weitere Schieber 3, 4 die in Fig. 1 rechte Querschnittshälfte des Schlauchabschnitts 1 absperren. Die Pneutmatikzylinder 5 und 6 des ersten Schiebers 2 und des zweiten Schiebers 3 sind durch die Maschinensteuerung so mit Druckluft beaufschlagbar, dass sie in die eine oder andere Endstellung verfahren. Lediglich der weitere Schieber 4 ist über den Pneumatikzylinder 7 in Zwischenpositionen verfahrbar, und zwar stufenlos. Dieser doppeltwirkende Pneutmatikzylinder 7 des weiteren Schiebers 4 ist zu jeder Seite mit einem pneumatischen Regelventil beaufschlagt, welches in Fig. 2 als Regler 11 dargestellt ist. Die Regelgröße 12 dieses Reglers 11 ist die Stellung des Kolbens 9 bzw. die Ausfahrlänge seiner Kolbenstange 10, welche die Stellung des weiteren Schiebers 4 bestimmt. Die Stellgrößen 13, 14 bilden dabei die Druckluftzufuhr zu den beiden Druckkammern des doppeltwirkenden Pneumatikzylinders 7. In Fig. 2 ist das vom Wegaufnehmer 8 abgegebene Signal als Regelgröße 12 dargestellt. Die Stellgrößen 13 und 14, welche durch pneumatische Regelventile erzeugt werden, beaufschlagen die beiden Kammern des Pneumatikzylinders 7. Zur Versorgung dient eine Druckluftsteuerung 15, welche dem Regler 11, also den pneumatischen Regelventilen vorgeschaltet ist. Die Führungsgröße 16 für den Regler 11 kommt von der maschinenseitig vorhandenen Maschinensteuerung 17 (SPS), welche über die Wägeeinrichtung der Maschine nicht nur das aktuelle Gewicht 20 des auf den Füllstutzen aufgesteckten Ventilsacks, sondern auch die Füllgeschwindigkeit 21 erfasst und darüber die Führungsgröße 16 ermittelt.

Mit der vorbeschriebenen Regelung des Pneumatikzylinders 7 des weiteren Schiebers 4 erfolgt stets die Feindosierung zum Ende des Füllvorgangs. Die Schieberstellungen in der Tabelle gemäß Fig. 1 verdeutlichen, wie die Dosiereinrichtung je nach Stellung des ersten Schiebers 2 zur Befüllung von großen bzw. kleinen Säcken eingestellt werden, wie dies in der Tabelle oben durch die Bezugsziffern 18 und 19 symbolisiert ist. Bezugsziffer 18 betrifft beispielsweise Säcke mit einem Füllgewicht von 25 kg, wohingegen Bezugsziffer 19 Säcke mit einem Füllgewicht von 5 kg betrifft. Beim Füllvorgang 18 wird zunächst ein Grobstrom A durchgelassen, in dem alle Schieber 2, 3, 4 in der geöffneten Stellung sind, wohingegen beim Füllvorgang 19 der erste Schieber 2 in der sperrenden Endstellung ist, sodass nur der halbe Schlauchquerschnitt freigegeben ist (Mittelstromdosierung 19 A und B). Eine Feinstromdosierung erfolgt dann im Weiteren, indem der zweite Schieber 3 geschlossen wird, sodass lediglich etwa ein Viertel des Schlauchquerschnitts als freier Durchgang verbleibt. Dieser Feinstrom wird dann durch die anhand von Fig. 2 beschriebene Regelung mittels des Pneumatikzylinders 7, welcher den weiteren Schieber 4 beaufschlagt, gesteuert. Am Ende des Füllvorgangs sind alle drei Schieber in der Sperrstellung 0, in welcher der Füllvorgang abgeschlossen und die Füllgutzufuhr zum Füllstutzen vollständig abgesperrt ist.

### Bezugszeichenliste

- 1: elastischer Schlauchabschnitt
- 2: erster Schieber
- 3: zweiter Schieber
- 4: weiterer Schieber
- 5: Pneumatikzylinder für 2
- 6: Pneumatikzylinder für 3
- 7: Pneumatikzylinder für 4
- 8: Wegaufnehmer an 7
- 9: Kolben von 7
- 10: Kolbenstange von 7
- 11: Regler
- 12: Regelgröße
- 13: Stellgröße
- 14: Stellgröße
- 15: Druckluftsteuerung
- 16: Führungsgröße
- 17: Maschinensteuerung
- 18: großer Sack 25 kg
- 19: kleiner Sack 5 kg
- 20: Füllgewicht
- 21: Füllgeschwindigkeit

## Patentansprüche

1. Vorrichtung zum Abfüllen von pulverförmigem Füllgut, insbesondere Pneumatikpacker, mit einer Dosiereinrichtung, welche einen elastischen Schlauchabschnitt (1) aufweist, durch den das abzufüllende Gut zum Zwecke der Dosierung durchleitbar ist und der an seiner Außenseite durch Schieber (2, 3, 4) beaufschlagt ist, mit denen der Durchgang des Schlauchabschnittes (1) teilweise oder vollständig absperrbar ist, wobei mindestens ein Schieber (2) aus einer ersten, den Durchgang freigebenden Position in eine zweite, den Durchgang teilweise absperrenden Position verbringbar ist und mindestens ein weiterer Schieber (4) vorgesehen ist, welcher aus einer den Durchgang ganz oder teilweise freigebenden Position in eine den Durchgang teilweise oder vollständig absperrenden Position verbringbar ist, wobei eine Wägeeinrichtung vorgesehen ist, welche das Gewicht des abgefüllten Füllguts erfasst, und eine Maschinensteuerung (17) vorgesehen ist, welche in Abhängigkeit eines einstellbaren Füllgewichts eine Sollgröße (16) für eine Füllstandsregelung (11) vorgibt, **dadurch gekennzeichnet, dass** eine Steuerung vorgesehen ist, mit der der mindestens eine weitere Schieber (4) zum Zwecke der Feindosierung in Zwischenpositionen verbringbar ist, dass die Steuerung des weiteren Schiebers in die Füllstandsregelung (11)eingegliedert ist, wobei die Maschinensteuerung (17) in Abhängigkeit der Geschwindigkeit der Gewichtszunahme und des Gewichts des abgefüllten Guts die Sollgröße (16) für die Regelung (11) vorgibt.

2. Vorrichtung nach Anspruch 1, **dadurch gekennzeichnet, dass** ein Schieber (2, 3, 4) durch einen doppeltwirkenden Pneumatikzylinder (5, 6, 7) gesteuert ist und dass der den weiteren Schieber (4) steuernde Pneumatikzylinder (7) mit einem Wegaufnehmer (8) versehen ist, welcher die Kolbenstellung erfasst.

3. Vorrichtung nach Anspruch 2, **dadurch gekennzeichnet, dass** jeder Schieber (2, 3, 4) durch einen doppelt wirkenden Pneumatikzylinder (5, 6, 7) gesteuert ist.

4. Vorrichtung nach einem der vorhergehenden Ansprüche, **dadurch gekennzeichnet, dass** die Regelung (11) eine elektronische Regelung mit zwei Druckregelventilen ist, die den beiden Druckräumen des doppeltwirkenden Pneumatikzylinders (7) des weiteren Schiebers(4) zugeordnet sind, wobei die Kolbenstellung die Regelgröße (12) bildet.

5. Vorrichtung nach einem der vorhergehenden Ansprüche, **dadurch gekennzeichnet, dass** ein erster Schieber (2) vorgesehen ist, der sich über den gesamten Querschnitt des Schlauchabschnitts (1) erstreckt.

6. Vorrichtung nach Anspruch 5, **dadurch gekennzeichnet, dass** der erste Schieber (2) in Absperrposition den Schlauchdurchgang halbiert.

7. Vorrichtung nach einem der vorhergehenden Ansprüche, **dadurch gekennzeichnet, dass** ein zweiter (3) und der weitere Schieber (4) vorgesehen sind, die sich jeweils über einen Teil des Querschnitts des Schlauchabschnitts (1) erstrecken.

8. Vorrichtung nach Anspruch 7, **dadurch gekennzeichnet, dass** der zweite und der weitere Schieber (3, 4) sich jeweils zur Hälfte über einen Teil des Querschnitts des Schlauchabschnitts (1) erstrecken.

9. Vorrichtung nach einem der Ansprüche 5 bis 8, **dadurch gekennzeichnet, dass** der erste Schieber (2) und der weitere Schieber (4) zu entgegengerichteten Seiten des Schlauchabschnitts (1) angeordnet sind.

10. Vorrichtung nach Anspruch 9, **dadurch gekennzeichnet, dass** der erste Schieber (2) einerseits und der zweite und der weitere Schieber (4) andererseits entgegengerichtet am Schlauchabschnitt (1) angeordnet sind.

## Claims

1. A device for dispensing powder filler, in particular pneumatic packers, with a dosing device having an elastic hose section (1), though which the material to be dispensed for purposes of dosing can be passed, and the outside of which is acted upon by sliders (2, 3, 4), with which the passage of the hose section (1) can be partially or completely shut off, wherein at least one slider (2) can be moved from a first position that clears the passage into a second position that partially shuts off the passage, and at least one additional slider (4) is provided, which can be moved from a position that completely or partially clears the passage into a position that partially or completely shuts off the passage, wherein a weighing device is provided that acquires the weight of the dispensed filler, and a machine control system (17) is provided that specifies a target value (16) for a level regulator (11) as a function of an adjustable filling weight, **characterized in that** a controller is provided with which the at least one additional slider (4) can be moved into intermediate positions for purposes of precise dosing, that the controller of the additional slider is integrated into the level regulator (11), wherein the machine control system (17) specifies the target value (16) for the regulator (11) as a function of the weight increase rate and the weight of the dispensed material.

2. The device according to claim 1, **characterized in that** a slider (2, 3, 4) is controlled by a dual-action pneumatic cylinder (5, 6, 7), and that the pneumatic cylinder (7) that controls the additional slider (4) is provided with a displacement transducer (8) that acquires the piston position.

3. The device according to claim 2, **characterized in that** each slider (2, 3, 4) is controlled by a dual-action pneumatic cylinder (5, 6, 7).

4. The device according to one of the preceding claims, **characterized in that** the regulator (11) is an electronic control with two pressure regulating valves, which are allocated to the two pressure chambers of the dual-action pneumatic cylinder (7) of the additional slider (4), wherein the piston position comprises the controlled variable (12).

5. The device according to one of the preceding claims, **characterized in that** a first slider (2) is provided, which extends over the entire cross section of the hose section (1).

6. The device according to claim 5, **characterized in that** the first slider (2) halves the hose passage in the shut-off position.

7. The device according to one of the preceding claims, **characterized in that** a second (3) and the additional slider (4) are provided, which each extend over a portion of the cross section of the hose section (1).

8. The device according to claim 7, **characterized in that** the second and the additional slider (3, 4) each extend halfway over a portion of the cross section of the hose section (1).

9. The device according to one of claims 5 to 8, **characterized in that** the first slider (2) and the additional slider (4) are arranged on opposite sides of the hose section (1)

10. The device according to claim 9, **characterized in that** the first slider (2) on the one hand and the additional slider (4) on the other hand are oppositely arranged on the hose section (1).

## Revendications

1. Dispositif pour conditionner un produit de remplissage pulvérulent, notamment un empaqueteur pneumatique, comprenant un dispositif de dosage qui comporte un tronçon de tuyau élastique (1) par lequel le produit de remplissage peut être passé afin de le doser, et qui est pourvu, sur sa face extérieure, de vannes (2, 3, 4) à l'aide desquelles le passage du tronçon de tuyau élastique (1) peut être bloqué partiellement ou entièrement, au moins une vanne (2) pouvant être déplacée d'une première position libérant le passage vers une deuxième position bloquant le passage partiellement, et au moins une autre vanne (4) étant prévue qui peut être déplacée d'une position libérant le passage entièrement ou partiellement vers une position bloquant le passage partiellement ou entièrement, un dispositif de pesage étant prévu qui mesure le poids du produit de remplissage et une commande de machine (17) étant prévue qui détermine une valeur de référence (16) pour un réglage de remplissage (11) en fonction d'un poids de remplissage réglable, **caractérisé en ce qu'**une commande est prévue à l'aide de laquelle ladite au moins une autre vanne (4) peut être déplacée dans des positions intermédiaires aux fins d'un dosage de précision, **en ce que** la commande de ladite autre vanne est intégrée dans le réglage de remplissage (11), la commande de machine (17) déterminant la valeur de référence (16) pour le réglage (11) en fonction de la vitesse d'augmentation du poids du produit conditionné.

2. Dispositif selon la revendication 1, **caractérisé en ce qu'**une vanne (2, 3, 4) est commandée par un cylindre pneumatique (5, 6, 7) à double effet et **en ce que** le cylindre pneumatique (7) commandant ladite autre vanne (4) est pourvu d'un capteur de trajet (8) qui saisit la position du piston.

3. Dispositif selon la revendication 2, **caractérisé en ce que** chaque vanne (2, 3, 4) est commandée par un cylindre pneumatique (5, 6, 7) à double effet.

4. Dispositif selon l'une des revendications précédentes, **caractérisé en ce que** le réglage (11) est un réglage électronique avec deux valves à réglage de pression qui sont attribuées aux deux chambres de pression du cylindre pneumatique (7) à double effet de ladite autre vanne (4), la position du piston constituant la valeur de réglage (12).

5. Dispositif selon l'une des revendications précédentes, **caractérisé en ce qu'**une première vanne (2) est prévue qui s'étend sur la section transversale entière du tronçon de tuyau élastique (1).

6. Dispositif selon la revendication 5, **caractérisé en ce que**, en position de blocage, la première vanne (2) réduit le passage de tuyau à la moitié.

7. Dispositif selon l'une des revendications précédentes, **caractérisé en ce qu'**une deuxième (3) et ladite autre vanne (4) sont prévues qui s'étendent chacune sur une partie de la section transversale du tronçon de tuyau (1).

8. Dispositif selon la revendication 7, **caractérisé en ce que** la deuxième (3) et ladite autre vanne (4) s'étendent chacune à moitié sur une partie de la section transversale du tronçon de tuyau (1).

9. Dispositif selon l'une des revendications 5 à 8, **caractérisé en ce que** la première vanne (2) et ladite autre vanne (4) sont disposées sur des côtés opposées du tronçon de tuyau (1).

10. Dispositif selon la revendication 9, **caractérisé en ce que** la première vanne (2), d'un côté, et la deuxième et ladite autre vanne (4), d'un autre côté, sont disposées sur le tronçon de tuyau (1) avec des orientations opposées.
